# EUROPEAN PATENT SPECIFICATION

(11) **EP 2 764 067 B1**
(45) Date of publication and mention of the grant of the patent: **04.01.2017**
(21) Application number: 12775899.3
(22) Date of filing: 05.10.2012
(51) Int. Cl.: C09J 191/06, C09J 153/02, C09J 123/08, C09J 193/04, C09J 167/08

(54) **PETROLATUM CONTAINING HOT MELT BOTTLE LABELING ADHESIVE**
VASELINE ENTHALTENDER HEISSSCHMELZKLEBER FÜR FLASCHENETIKETTE
ADHÉSIF THERMOFUSIBLE D'ÉTIQUETAGE DE BOUTEILLES CONTENANT PÉTROLATUM

(30) Priority: 05.10.2011 US 201161543537 P
(43) Date of publication of application: 13.08.2014
(73) Proprietor: Bostik, Inc., Wauwatosa, Wisconsin 53226 (US)
(72) Inventor: VITRANO, Michael, West Allis, WI 53219 (US); STAFEIL, Kevin, Delafield, WI 53018 (US); MAGGARD, Richard, Oak Creek, WI 53154 (US)
(74) Representative: Sanderson & Co.
(86) International application number: PCT/US2012/059068
(87) International publication number: WO 2013/052875

(56) References cited:
- US-A- 3 644 252
- US-A- 4 680 333

## Description

### BACKGROUND INFORMATION

Hot melt adhesives have been used for years to label both glass and plastic bottles. Plastic bottles containing carbonated beverages are particularly challenging. After bottling, carbonated beverages will cause plastic bottles to expand. The label system needs to accommodate this expansion. The adhesive used to adhere the label onto the plastic bottle also needs to accommodate this expansion.

Paper labels are rigid and will not expand. Typically, hard, glassy adhesives are used to bond the paper label to the bottle. The adhesive on paper labels need to resist creep, preventing the label from "flagging" (partial delamination of the label overlap from the bottle). Plastic labels are flexible and will expand. Typically, softer, elastic, tacky adhesives are used on plastic film labels, which are also generally more difficult to adhere to than paper labels. The adhesive used to adhere plastic labels needs to be of sufficient tack to adhere the label to the bottle, and strong enough to withstand the expansion of the label/bottle. In this type of application, the adhesive needs to have a greater internal strength than that of the label. The adhesives' increased internal strength forces the label to stretch and expand, maintaining the bond at the label overlap. Should the adhesive stretch or creep a gap will appear between the leading and trailing edge of the label on the bottle at the label overlap.

Plastic labels are becoming more rigid in order to support increased graphics and facilitate the printing process. Additionally, plastic bottles are experiencing an overall gauge reduction to achieve cost savings and meet manufacturers' "green" initiatives. Clear labels are also entering the market place. These labels, due to their base composition, have greater tensile strength than previous plastic labels. The greater tensile strength of these labels resists stretching, causing existing adhesives to creep, resulting in a labeling failure (the label's leading and trailing edges separate). Furthermore, some plastic film labels are susceptible to oil migration from the adhesive into the label. This migration causes aesthetically unpleasing wrinkles.

Adhesive formulators are struggling to develop adhesives that adhere to these higher tensile strength, plastic labels, and do not exhibit oil migration from the adhesive into the label. This invention details a novel way a hot melt formulator can impart low viscosity, superior adhesion, increased creep resistance, and no oil migration in hot melt bottle labeling adhesives, without compromising other properties.

US Patent No. 4,680,333 discloses hot melt adhesive compositions prepared from styrene-isoprene-styrene block copolymers, a low softening point highly aliphatic resin and a metallic salt of a fatty acid.

US Patent No. 3,644,252 discloses a hot-melt, pressure-sensitive adhesive composition comprising a primary polymer consisting of a copolymer of styrene and isobutylene, and a secondary polymer.

### SUMMARY OF THE INVENTION

The invention details hot melt adhesive formulations, comprised of a petrolatum-containing adhesive based on a Styrenic Block Copolymer (SBC), a polyolefin, a tackifying resin, and optionally a wax. The preferred adhesive is one that has a viscosity of less than 2 Pas (2000 cP) at 121°C (250°F), a crossover temperature of greater than 62°C, a modulus of less than 1.0x10⁶ Nm⁻² (1.0x10⁷ dynes/cm²), and contains a styrenic block copolymer having a melt index of greater than 20g/10 minutes. These formulations provide low viscosity, superior adhesion characteristics, increased creep resistance and reduced oil migration, over traditionally formulated hot melt bottle labeling adhesives.

Applications include, but are not limited to, bottle and can labeling, lamination adhesives, general assembly, non-woven, and filtration.

### INSTRUMENTAL CHARACTERIZATION

Viscosity profiling indicates that adhesives made with petrolatum, in place of the typical mineral oil, exhibit a much flatter viscosity curve over the adhesive application window.

Rheological analysis shows that when substituting at a 1 for 1 ratio, petrolatum- containing adhesives have a higher G'/ G" crossover point than adhesives that incorporate mineral oil. This corresponds to higher temperature resistance.

### PERFORMANCE EVALUATION

The formula described in this invention represents an SBC/polyolefin/Petrolatum hybrid, which combines the film adhesion characteristics of typical pressure sensitive adhesives with the increased tensile strength and creep resistance of non-pressure sensitive adhesives.

Bond evaluation of the novel adhesive formulations described in this invention show superior performance over traditional pressure sensitive and non-pressure sensitive bottle labeling adhesives. Increased creep resistance does not come at the expense of adhesion to plastic film substrates.

### DESCRIPTION OF THE INVENTION

It has been discovered that the use of petrolatum in hot melt adhesive bottle labeling formulas will improve creep resistance, while not sacrificing adhesion in regards to plastic film substrates. Additionally, petrolatum-containing adhesives will not exhibit oil migration into sensitive film stock, thereby reducing aesthetically unpleasing wrinkling.

The present invention is comprised of a Styrenic Block Copolymer (SBC), petrolatum, a polyolefin, a tackifying resin, and optionally a wax, a plasticizer, a stabilizer, or other auxiliary additives. Although the examples illustrate a hot melt adhesive comprised of a SBC and EVA polymers, it has been found that other polyolefin polymers could also be used in place of EVA, including but not limited to, propylene/ethylene copolymers, ethylene/alphaolefin copolymers, olefin block copolymers, ethylene n-butyl acrylate copolymers, and metallocene catalyzed polyethylene.

Historically, liquid plasticizers, typically mineral oil, have been used in pressure sensitive adhesives to improve adhesion and reduce viscosity. The addition of these liquid plasticizers typically results in mutually exclusive properties in terms of creep resistance and improved film adhesion. The substitution of the petrolatum for mineral oil improves creep resistance, eliminates oil migration, and, when properly formulated, does not decrease film adhesion.

The styrenic block copolymer can be any of the typical grades used to prepare conventional hot melt adhesives such as styrene-isoprene-styrene (SIS), styrene-butadiene-styrene (SBS), styrene-isoprene/butadiene-styrene (SIBS) or the hydrogenated derivatives such as styrene-(ethylene-butylene)-styrene (SEBS).

Generally speaking, since the viscosity of these bottle labeling adhesives tend to be very low, it is desirable to use polymers that have higher styrene contents (>25% and up to 51 % by weight) and relatively low molecular weights (M_{w}<200,000 Daltons). Particularly preferred are polymers such as Vector 4411, which is a low molecular weight linear SIS polymer with a styrene content of 44 percent and virtually no diblock. The Melt Index of this polymer according to ASTM 1238 using 200°C and a 5 kg. weight is 40 grams/10 minutes which demonstrates its relatively low molecular weight. Another preferred polymer is Vector 4461 or 6241 which are linear SBS polymers containing 43% styrene and virtually no diblock. The Melt Index of these polymers using ASTM 1238 and a temperature of 200°C and a 5 kg. weight is 23, which shows that the polymer is relatively low molecular weight. All of these polymers are available from Dexco Polymers (now TRSC). Other suppliers of SBC polymers are Kraton Performance Polymers Inc., and EniChem Elastomers Americas Inc.

The styrenic block copolymer is blended with another olefinic polymer such as an ethylene vinyl acetate copolymer. These polymers are well known and widely used as base polymers for hot melt adhesives. They have vinyl acetate levels from as low as 9% to as high as 40% or more by weight. They also range in Melt Index (190°C/2.16 kg) from a fractional number of 500 to as high as 2500 grams/10 min. There are grades that are so low in molecular weight they are characterized by their melt viscosity instead of Melt Index. The higher melt index grades are particularly desirable in the current invention since they help to lower the viscosity of the finished adhesives. Particularly preferred are grades such as Escorene AD2528, which has 27.6 % vinyl acetate and a Melt Viscosity (ASTM 3236) of 2.8 Pas (2800 cP) at 190°C (374°F). These polymers are available from DuPont Chemical, Celenese Corporation and ExxonMobil Chemical Co.

The current invention also uses 2% to 30%, preferably 2% to 20%, petrolatum as a key component of the formulation. Petrolatums are homogeneous mixtures of oily and waxy long-chain, non-polar hydrocarbons. They are considered to be semi-solid materials with the consistency of petroleum jelly. According to the Merck Index, (13^{th} edition), petrolatum is "purified mixture of semisolid hydrocarbons, chiefly of the methane series of the general formula CₙH₂ₙ₊₂. Actually, petrolatum is a colloidal system of non-straight-chain solid hydrocarbons and high-boiling liquid hydrocarbons, in which most of the liquid hydrocarbons are held inside the micelles".

Petrolatums have melting points according to ASTM D-127 of between 49°C (120°F) and 66°C (150°F). They can be further characterized by their Consistency as per ASTM D-937 and Viscosity at 99°C (210°F) according to ASTM D-445. Particularly preferred grades of petrolatum are sold by Sonneborn Refined Products under the trade name Protopet^{®}. One example is Yellow Protopet 2A^{®} Petrolatum. This grade has a Melting Point (ASTM D-127) of 54/60°C (130/140°F), a Consistency (ASTM D-937) of 18/21 mm (180/210 decimillimeters) at 25°C (77°F) and a Viscosity (ASTM D-445) at 99°C (210°F) of 0.12cm²/s (67 SUS (12 cSt)).

In these formulations the use of petrolatum provides several advantages over the addition of mineral oil or waxes (paraffin, microcrystalline or synthetic). They include decreased surface tack without negatively impacted hot tack as would be the case with using mineral oil. In addition, their use eliminates the migration of oil from the adhesive into the film which can cause wrinkling or bond failure. Petrolatum increases the high temperature performance without impacting adhesion as a wax would. Petrolatum also gives the formulation low viscosity which is needed for the low application temperatures that are generally used in this type of application.

Another attribute provided by the petrolatum is improved cold flow over the use of mineral oil. The product H4124A in Table 1 below has a significant degree of cold flow at room temperature. Cold flow is a property of a material to very slowly flow or creep at ambient or slightly elevated temperatures (e.g. 38°C (100°F)). This is a significant drawback to an adhesive formulation since it can result in decreased bond strength over time when the finished product is stored in a warehouse, for example. It also makes packaging of the adhesive itself problematic because the adhesive can flow out of its own package over time and severely limits the type of packaging that can be used. While H4124A works well as a bottle label adhesive, it has serious drawbacks that limit its use because it does have some degree of cold flow. Example 1 in Table 1 below is a similar product but does not have the degree of cold flow that H4124A has through the use of petrolatum instead of mineral oil in the formula.

Any type of styrenic block copolymer can be used in a hot melt adhesive formula according to the present invention, and may be incorporated into the composition in amounts of from 1% to 30% by weight, preferably from 1% to 25% by weight, and most preferably from 1% to 10% by weight. Among the useful styrenic block copolymers are those having structure A-B, A-B-A, A-(B-A)ₙ-B, or (A-B)ₙ-Y wherein A comprises a polyvinyl aromatic block having a Tg higher than 80°C, B comprises a rubbery midblock having a Tg lower than -10°C, Y comprises a multivalent compound, and n is an integer of at least 3. Examples of these latter block copolymers conventionally used in hot melt adhesive compositions are styrenic block copolymers (SBc) and include styrene-butadiene (SB), styrene-butadiene-styrene (SBS), styrene-isoprene-styrene (SIS), styrene-isoprene (SI), styrene-isoprene-butadiene-styrene (SIBS), styrene-ethylene-butylene-styrene (SEBS), styrene-ethylene-butylene (SEB), styrene-ethylene propylene-styrene (SEPS), styrene-ethylene propylene (SEP), and styrene-ethylene-ethylene-propylene-styrene (SEEPS or hydrogenated SIBS). The total styrene content of the polymers can be as much as 51 wt-% of the polymer. In an S-B-S (styrene-butadiene-styrene) copolymer, the preferred molecular weight (M_{w}) is 50,000 to 120,000, and the preferred styrene content is 20 to 45 wt-%. In an S-I-S (styrene-isoprene-styrene) copolymer, the preferred molecular weight (M_{w}) is 100,000 to 200,000 and the preferred styrene content is 14-35 wt-%. Hydrogenating the butadiene mid-blocks produces rubbery mid-blocks that are typically converted to ethylene-butylene mid-blocks. Such block copolymers are available for example from Kraton Polymers, Polimeri Europa, Total Petrochemicals, Dexco, and Kuraray. Multi-block or tapered block copolymers (the A-(B-A)ₙ-B type) are available from Firestone. Block copolymers structures can contain any acrylic monomers or acrylic phase in general, either presenting a high Tg like methyl methacrylate, or having an elastomeric behavior like butyl acrylate. Also, the polymer fraction of the hot melt adhesive can contain one or more other phases, can contain more than one structure or can contain other polymers like copolymers of ethene, propene or other olefinic monomer, or like copolymerization of acrylic monomers. These additional polymers can be homopolymers, or copolymers and can be potentially modified by any during- or after-polymerization modification like grafting or chain-scission. Blends of various polymers may also be employed so long as the composition retains the desired viscosity, and low temperature application characteristics of the present invention.

The tackifying resins or tackifiers which are used in the hot melt adhesives of the present invention are those which extend adhesive properties and improve specific adhesion. As used herein, the term "tackifying resin" or "tackifier" include:
(a) Aliphatic and cycloaliphatic petroleum hydrocarbon resins having Ring and Ball softening points of from 10°C to 160°C, as determined by ASTM method E28-58T, the latter resins resulting from the polymerization of monomers consisting primarily of aliphatic and/or cycloaliphatic olefins and diolefins; also included are the hydrogenated aliphatic and cycloaliphatic petroleum hydrocarbon resins; examples of such commercially available resins based on a C5 olefin fraction of this type are Piccotac 95 tackifying resin, and Escorez 1310LC sold by ExxonMobil Chemical Company;
(b) Aromatic petroleum hydrocarbon resins and the hydrogenated derivatives thereof;
(c) Aliphatic/aromatic petroleum derived hydrocarbon resins and the hydrogenated derivatives thereof;
(d) Aromatic modified cycloaliphatic resins and the hydrogenated derivatives thereof;
(e) Polyterpene resins having a softening point of from 10 °C to 140°C, the latter polyterpene resins generally resulting from the polymerization of terpene hydrocarbons, such as the mono-terpene known as pinene, in the presence of Friedel-Crafts catalysts at moderately low temperatures; also included are the hydrogenated polyterpene resins;
(f) Copolymers and terpolymers of natural terpenes, e.g. styrene/terpene, α-methyl styrene/terpene and vinyl toluene/terpene;
(g) Natural and modified rosin such as, for example, gun rosin, wood rosin, tall-oil rosin, distilled rosin, hydrogenated rosin, dimerized rosin and polymerized rosin;
(h) Glycerol and pentaerythritol esters of natural and modified rosin, such as, for example, the glycerol ester of pale wood rosin, the glycerol ester of hydrogenated rosin, the glycerol ester of polymerized rosin, the pentaerythritol ester of pale wood rosin, the pentaerythritol ester of hydrogenated rosin, the pentaerythritol ester of tall-oil rosin, and the phenolic modified pentaerythritol ester of rosin;
(i) Phenolic-modified terpene resins such as, for example, the resin product resulting from the condensation in an acidic medium of a terpene and a phenol;

Mixtures of two or more of the above described tackifying resins may be required for some formulations. Although a range of 5% to 65% by weight tackifying resin may be used, the preferred amount is from 20% to 50% by weight. Tackifying resins which are useful for the present invention can perhaps include polar tackifying resins, however, the choice of available polar tackifying resins is limited in view of the fact that many of the polar resins appear only partially compatible with polyolefin polymers.

As noted above, tackifying resins which are useful within the scope of the present invention comprise 5% to 65% by weight. Preferably, the tackifying resins can be selected from any of the nonpolar types, which are commercially available. Preferred resins are aliphatic petroleum hydrocarbon resins examples of which are based on C5 olefins such as Hercotac 1148 available from Hercules Corp. Most preferred are nonpolar products which are hydrogenated di-cyclo-penta-diene (DCPD) based or aromatically modified derivatives thereof with softening points above 70°C. Examples of such resins are Escorez 5400 and Escorez 5600 sold by ExxonMobil Chemical company, and Sylvatac RE85 available from Arizona Chemical Co.

A plasticizer can be present in the composition of the present invention in amounts of 0% to 10% by weight, preferably from 0% to 5%, in order to provide desired viscosity control and to impart flexibility. A suitable plasticizer may be selected from the group which includes the usual plasticizing oils, such as mineral oil, but also olefin oligomers and low molecular weight polymers, as well as vegetable and animal oils and derivatives of such oils. The petroleum derived oils which may be employed are relatively high boiling materials containing only a minor proportion of aromatic hydrocarbons. In this regard, the aromatic hydrocarbons should preferably be less than 30% and more particularly less than 15% of the oil, as measured by the fraction of aromatic carbon atoms. More preferably, the oil may be essentially non-aromatic. The oligomers may be polypropylenes, polybutenes, hydrogenated polyisoprenes, or hydrogenated polybutadienes, having average molecular weight between 350 and 10,000. Suitable vegetable and animal oils include glycerol esters of the usual fatty acids and polymerization products thereof. Other useful plasticizers can be found in the families of conventional dibenzoate, phosphate, phthalate esters, as well as esters of mono- or polyglycols. Examples of such plasticizers includes, but are not limited to dipropylene glycol dibenzoate, pentaerythritol tetrabenzoate, 2-ethylhexyl diphenyl phosphate, polyethylene glycol 400-di-2-ethylhexoate; butyl benzyl phthalate, dibutyl phthalate and dioctylphthalate. The plasticizers that find usefulness in the present invention can be any number of different plasticizers but the inventors have discovered that the mineral oil and liquid polybutenes having average molecular weight less than 5,000 are particularly advantageous. As will be appreciated, plasticizers have typically been used to lower the viscosity of the overall adhesive composition without substantially decreasing the adhesive strength and/or the service temperature of the adhesive as well as to extend the open time and to improve flexibility of the adhesive.

Waxes can be used to reduce the melt viscosity of the hot melt adhesive composition. Although amounts varying from 0% to 25% by weight may be used in the composition of the present invention, the preferred amounts are between 0% to 10% by weight. These waxes can also effect the set-up time and the softening point of the adhesive. Among the useful waxes are:
1. low molecular weight, that is, number average molecular weight (Mn) equal to 500 - 6000, polyethylene wax having a hardness value, as determined by ASTM method D-1321, of from 0.1 to 120, having an ASTM softening point of from 65 °C to 140 °C;
2. petroleum waxes such as paraffin wax having a melting point of from 50 °C to 80 °C and microcrystalline wax having a melting point of from 55 °C to 100 °C, the latter melting points being determined by ASTM method D127-60;
3. synthetic waxes made by polymerizing carbon monoxide and hydrogen such as Fischer-Tropsch wax; and
4. polyolefin waxes. As used herein, the term "polyolefin wax" refers to those polymeric or long-chain entities comprised of olefinic monomer units. This type of material is commercially available under the trade name designation "Epolene". The materials which are preferred for use in the composition of the present invention have a Ring and Ball softening point of from 100°C to 170°C. As should be understand, each of these wax diluents is solid at room temperature.

Other substances which include hydrogenated animal, fish and vegetable fats and oils such as hydrogenated tallow, lard, soya oil, cottonseed oil, castor oil, menhadin oil, and cod liver oil, and which are solid at room temperature by virtue of their being hydrogenated, have also been found to be useful with respect to functioning as a wax diluent equivalent. These hydrogenated materials are often referred to in the adhesive industry as "animal or vegetable waxes".

The present invention may include a stabilizer in an amount of from 0% to 3% by weight. Preferably from 0.1% to 1% of a stabilizer is incorporated into the composition. The stabilizers which are useful in the hot melt adhesive compositions of the present invention are incorporated to help protect the polymers noted above, and thereby the total adhesive system, from the effects of thermal and oxidative degradation which normally occurs during the manufacture and application of the adhesive as well as in the ordinary exposure of the final product to the ambient environment. Among the applicable stabilizers are high molecular weight hindered phenols and multifunction phenols, such as sulfur and phosphorous-containing phenols. Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho- positions relative to the phenolic hydroxyl group. The presence of these sterically bulky substituted radicals in the vicinity of the hydroxyl group serves to retard its stretching frequency and correspondingly, its reactivity; this steric hindrance thus providing the phenolic compound with its stabilizing properties. Representative hindered phenols include:
1,3,5-trimethyl-2,4,6-tris(3-5-di-tert-butyl-4-hydroxybenzyl) benzene;
pentaerythirtol tetrakis-3(3,5-di-tert-butly-4-hydroxyphenyl) propionate;
n-octadecyl-3(3,5-di-tert-butyl-4-hydroxyphenyl) propionate;
4,4'-methylenebis(4-methyl-6-tert butylphenol);
2,6-di-tert-butylphenol;
6-(4-hydroxyphnoxy)-2,4-bis(n-ocytlthio)-1,3,5-triazine;
2,3,6-tris(4-hydroxy-3,5-di-tert-butyl-phenoxy)-1,3,5-triazine;
di-n-octadecyl-3,5-di-tert-butyl-4-hydroxybenzylphosphonate;
2-(n-octylthio)ethyl-3,5-di-tert-butyl-4-hydroxybenzoate; and
sorbitol hexa-3(3,5-di-tet-butyl-4-hydroxy-phenyl) propionate.

Especially preferred as a stabilizer is pentaerythritol tetrakis-3(3,5-di-tert-butyl-4-hydroxyphenol) propionate.

The performance of these stabilizers may be further enhanced by utilizing, in conjunction therewith; (1) synergists such as, for example, thiodipropionate esters and phosphites; and (2) chelating agents and metal deactivators as, for example, ethylenediamenetetraacitic acid, salts thereof, and disalicylalpropylenediimine.

It should be understood that other optional auxiliary additives in amounts of 0% to 3% may be incorporated into the adhesive composition of the present invention in order to modify particular physical properties. These may include, for example, such materials as inert colorants e.g. titanium dioxide, fillers, fluorescent agents, surfactants, other types of polymers. Typical fillers include talc, calcium carbonate, clay silica, mica, wollastonite, feldspar, aluminum silicate, alumina, hydrated alumina, glass microspheres, ceramic microspheres, thermoplastic microspheres, baryte and wood flour. Surfactants are particularly important in hygienic disposable non-wovens because they can dramatically reduce the surface tension, for example, of the adhesive applied to a diaper core, thereby permitting quicker transport and subsequent absorption of urine by the core.

The hot melt adhesive composition of the present invention may be formulated by using any of the mixing techniques known in the art. A representative example of the prior art mixing procedure involves placing all the components, except the polymers, in a jacketed mixing kettle equipped with a rotor, and thereafter raising the temperature of the mixture to a range from 149°C (300°F) to 204°C (400°F) to melt the contents. It should be understood that the precise temperature to be used in this step would depend on the melting points of the particular ingredients. The polymers are subsequently introduced to the kettle under agitation and the mixing is allowed to continue until a consistent and uniform mixture is formed. The content of the kettle is protected with inert gas such as carbon dioxide or nitrogen during the entire mixing process.

### STATIC SHEAR AT 38°C (100°F)

Static shear testing measures the ability of the adhesive to resist a constant force. This test mimics the force an adhesive is exposed to when a plastic bottle undergoes expansion due to increasing pressure from the carbonated liquid as the temperature increases.

Five different commercial films commonly used in bottle labeling were tested in conjunction with three adhesive formulations. Example 1 is the petrolatum-containing adhesive described in this patent application. H4124A is a pressure sensitive hot melt adhesive that is currently used in plastic bottle labeling applications. It is available from Bostik, Inc. The competitive pressure sensitive adhesive is a commercial standard, typically seen in plastic bottle labeling applications.

Samples were placed in a laboratory incubator set to 38°C (100°F) and 50% relative humidity and held for 15 min. Samples were clamped into place with a three-inch distance above the center of the bond. A 500-gram weight was attached three inches below the center of the bond. Timers were reset to zero and counted up until the bond failed completely. Where failure was exhibited, cohesive failure was observed. The data represents 5 trials of each film substrate. Below are the results from the static shear testing:

**Table 1**

| Substrate | Adhesive | Average Time (min) | Max Time (min) |
|---|---|---|---|
| Exxon Mobil 612/28 LLG | Example 1 | 316.7 | 332.3 |
| AET B503/WTL II | Example 1 | 335.6 | 343.2 |
| 48 CTL/WTML (metallized) | Example 1 | 339.7 | 345.2 |
| 75CTL/75CTL | Example 1 | 308.9 | 315.7 |
| 48CTL/WTL II | Example 1 | 335.1 | 367.6 |
| Exxon Mobil 612/28 LLG | H4124A | 54.3 | 58.4 |
| AET B503/WTL II | H4124A | 52.6 | 57.6 |
| 48 CTL/WTML (metallized) | H4124A | 50.2 | 53.1 |
| 75CTL/75CTL | H4124A | 54.5 | 58.1 |
| 48CTL/WTL II | H4124A | 51.9 | 55.5 |
| Exxon Mobil 612/28 LLG | Competitive | 108.3 | 113.2 |
| AET B503/WTL II | Competitive | 136.9 | 142.7 |
| 48 CTL/WTML (metallized) | Competitive | 107.1 | 115.7 |
| 75CTL/75CTL | Competitive | 116.0 | 124.9 |
| 48CTL/WTL II | Competitive | 110.5 | 114.1 |

The above data indicate the petrolatum-containing adhesive clearly outperforms typical pressure sensitive adhesives in terms of creep resistance.

### DYNAMIC SHEAR

Dynamic shear represents an adhesive's ability to adhere to a substrate.

Five different commercial films were tested in conjunction with three adhesive formulations, and the results are shown in Table 2 below. Example 1 in Table 2 is the petrolatum-containing adhesive described in this patent application. H4124A is a pressure sensitive hot melt adhesive that is currently used in plastic bottle labeling applications. It is available from Bostik, Inc. The competitive pressure sensitive adhesive is a commercial standard, typically seen in plastic bottle labeling applications.

Samples were placed in a controlled environment laboratory equipped with an Instron tensile tester and held for 15 min. The controlled environment lab is set to 22°C (72°F) and 50% relative humidity. Samples were clamped in the Instron tensile tester with a three-inch distance above and below the center of the bond. Each sample was evaluated with a crosshead speed of one inch per minute using a 23kg (50-pound) load cell. The data represents 5 trials of each film substrate. Below are the results from the dynamic shear testing:

**Table 2**

| Substrate | Adhesive | Average Load (N (1bf)) | Max Load (N (1bf)) | Failure Mode |
|---|---|---|---|---|
| Exxon Mobil 612/28 LLG | Example 1 | 58.565 (13.166) | 62.524 (14.056) | Substrate |
| AET B503/WTL II | Example 1 | 65.634 (14.755) | 67.399 (15.152) | Substrate |
| 48CTL/WTML (metallized) | Example 1 | 61.208 (13.760) | 63.912 (14.368) | Substrate |
| 75CTL/75CTL | Example 1 | 58.463 13.143 | 63.258 (14.221) | Cohesive |
| 48CTL/WTL II | Example 1 | 62.008 (13.940) | 65.318 (14.684) | Substrate |
| Exxon Mobil 612/28 LLG | H4124A | 45.274 (10.178) | 46.119 (10.368) | Cohesive |
| AET B503/WTL II | H4124A | 48.085 | 52.715 | Cohesive |
| | | (10.810) | 11.851 | |
| 48CTL/WTML (metallized) | H4124A | 47.445 (10.666) | 55.500 (12.477) | Cohesive |
| 75CTL/75CTL | H4124A | 53.517 (12.031) | 56.261 (12.648) | Cohesive |
| 48CTL/WTL II | H4124A | 44.714 (10.052) | 46.431 (10.438) | Cohesive |
| Exxon Mobil 612/28 LLG | Competitive | 60.901 (13.691) | 62.297 (14.005) | Substrate |
| AET B503/WTL II | Competitive | 65.687 (14.767) | 69.606 15.648 | Substrate |
| 48CTL/WTML (metallized) | Competitive | 60.322 (13.561) | 70.264 (15.796) | Substrate |
| 75CTL/75CTL | Competitive | 65.856 (14.805) | 67.773 (15.236) | Cohesive |
| 48CTL/WTL II | Competitive | 63.374 (14.247) | 66.737 (15.003) | Substrate |

These data indicate that the petrolatum-containing adhesive has at least equivalent, and in some cases, improved adhesion to film substrates. When considered in conjunction with the Static Shear results, the petrolatum-containing adhesive offers equivalent adhesion with improved creep resistance.

### DESCRIPTION OF PREFERRED EMBODIMENTS

Ranges of the weight percent of the components of the adhesive composition of this invention are detailed below:

A hot melt adhesive comprising 1) 2% to 30% of a petrolatum, 2) 1% to 30% of a styrenic block copolymer, 3) 1% to 30% of a polyolefin polymer, 4) 20% to 50% of a tackifier or blend of tackifiers, 5) 0% to 25% of a wax, 6) 0% and 3% of an antioxidant or stabilizer, and 7) 0% to 3% additives (pigments, fillers).

The following specific examples are given to further illustrate the invention, and reference is made to the data in Table 3.

**Table 3**

| | **Bottle Label Adhesive Examples** | | | | |
|---|---|---|---|---|---|
| **Raw Material** | **Example 1** | **Comparative 1** | **Comparative 2** | **Comparative 3** | **Comparative 4** |
| Yellow Protopet 2A | 17 | 17 | 17 | | |
| Sylvatac RE85 | 50.8 | 50.8 | 50.8 | 50.8 | 50.8 |
| Vector 4411 A (SIS, 44% styrene, 40 MI) | 8.5 | | 8.5 | 8.5 | 8.5 |
| Kraton 1165 (SIS, 30% styrene, 8 MI) | | 8.5 | | | |
| Vector 4461 (SBS, 43% styrene, 23 MI) | | | | | |
| Escorene UL 8705 (28% VA, 800 MI) | | | 14.4 | | |
| Escorene AD2528 (28% VA, 2500 MI) | 14.4 | 14.4 | | 14.4 | 14.4 |
| Epolene E-14E | 8.5 | 8.5 | 8.5 | 8.5 | 8.5 |
| 150 MP paraffin wax | | | | 17 | |
| Nyplast 222B | | | | | 17 |
| Irganox 1010 | 0.8 | 0.8 | 0.8 | 0.8 | 0.8 |
| Total | 100 | 100 | 100 | 100 | 100 |
| | | | | | |

| Physical Properties | | | | | |
|---|---|---|---|---|---|
| Glass transition temperature (rheology) | 28°C | | | | 20.4°C |
| Modulus at 25°C (G') | 8.9 x 10^6 | | | 6.8 x 10^7 | 4.8 x 10^6 |
| Crossover temperature | 70°C | | | 69°C | 60°C |
| Softening Point | 83°C (182 °F) | | | | |
| Viscosity at 300°F | 0.5Pas (500cP) | | | | |
| Viscosity at 275°F | 0.875Pas (875cP) | | | | |
| Viscosity at 250°F | 1.45Pas (1450cP) | 2.4Pas (2400cP) | 3Pas (3000cP) | 1.43Pas (1430cP) | 2.175Pas (2175cP) |
| Viscosity at 225°F | 2.7Pas (2700 cP) | | | | |

As demonstrated by the data in Table 3, Example 1 meets all of the criteria required by the present invention to function as a label adhesive and is the preferred embodiment. Example 1 has a low viscosity (less than 2Pas (2000cP) at 121°C (250°F)), a crossover temperature of greater than 62°C, a modulus of less than 1.0x10⁶Nm⁻² (1.0x10⁷ dynes/cm²), and it contains a block copolymer with a melt index (MI) of greater than 20g/10 minutes.

Comparative 1 has the same formulation as Example 1 except it contains an SIS block copolymer having a melt index less than 20g/10 minutes. Kraton 1165 has melt index of 8g/10 minutes which results in a composition having its viscosity too high (2.4Pas (2400cP)).

Comparative 2 has the same formulation as Example 1 except it contains Escorene UL 8705 which is a vinyl-acetate having a melt index of 800g/10 minutes. Because higher melt indexes correlates to higher viscosity, Comparative 2 has too high a viscosity (3Pas (3000cP)).

Comparative 3 has the same formulation as Example 1 except it contains paraffin wax instead of petrolatum. This results in the composition having too high of a modulus (6.8x10⁶Nm⁻² (6.8x10⁷ dynes/cm²)). As a result, Comparative 3 sets up too quickly and has poor bonding characteristics.

Comparative 4 has the same formulation as Example 1 except it contains mineral oil instead of petrolatum. This results in the composition having too low of a crossover temperature (60°C) and too high of a viscosity (2.175Pas (2175cP)). As a result, Comparative 4 is too soft and sets up too slowly.

### RAW MATERIALS

Yellow Protopet 2A is a petrolatum available from Sonneborn Refined Products with a Melting Point (ASTM D-127) of 54/60°C (130/140°F).

Sylvatac RE85 is a glycerol ester of tall oil rosin with a Ring & Ball Softening Point (ASTM E-28) of 85°C. It is available from Arizona Chemical Co.

Vector 4411A is a linear styrene-isoprene-styrene block copolymer with a styrene content of 44 percent. It has essentially no diblock and a melt flow rate (MI) (ASTM 1238; 200°C/5 kg.) of 4g/min (40dg/min). It is available from Dexco Polymers LLP.

Escorene AD 2528 is an ethylene vinyl acetate copolymer with 28 percent vinyl acetate and a melt flow rate (MI) (ASTM 1238; 200°C/5 kg) of 2500 available from ExxonMobil Chemical Co.

Epolene E-14E is a low molecular weight, low density, oxidized polyethylene. It has a Ring & Ball Softening Point (ASTM E-28) of 104°C and a Brookfield Viscosity at 125°C of 0.375Pas (375cP).

Irganox 1010 is a hindered phenolic antioxidant available from BASF.

Nyplast 222B is a mineral oil plasticizer, obtained from Nanas USA, Inc. Houston, TX.

Vector 4461 is a styrene-butadiene-styrene block copolymer with a styrene content of 43 percent. It has essentially no diblock and a melt flow rate (MI) (ASTM 1238; 200°C/5 kg.) of 2.3g/min (23dg/min). It is available from Dexco Polymers LLP.

Escorene AD UL 8705 is an ethylene vinyl acetate copolymer with 28 percent vinyl acetate and a melt flow rate (MI) (ASTM 1238; 200°C/5 kg) of 800 available from ExxonMobil Chemical Co.

Kraton 1165 is a styrene-isoprene-styrene block copolymer with a styrene content of 30 percent. It has essentially no diblock and a melt flow rate (MI) (ASTM 1238; 200°C/5 kg.) of 0.8g/min (8dg/min).

## Claims

1. A hot melt adhesive composition, comprising:
2% to 30% of a petrolatum;
1% to 30% of a styrenic block copolymer;
1% to 30% of a polyolefin polymer;
20% to 50% of a tackifier or blend of tackifiers;
0% to 25% of a wax;
0% to 3% of an antioxidant or stabilizer; and
0% to 3% of auxiliary additives.

2. The composition of claim 1 wherein said styrenic block copolymer is selected from the group consisting of styrene-isoprene-styrene (SIS), styrene-butadiene-styrene (SBS), styrene-isoprene/butadiene-styrene (SIBS), and styrene-(ethylene-butylene)-styrene (SEBS).

3. The composition of claim 1 wherein said polyolefin polymer is selected from the group consisting of ethylene vinyl acetate (EVA), propylene/ethylene copolymers, ethylene/alpha-olefin copolymers, olefin block copolymers, ethylene n-butyl acrylate copolymers, and metallocene catalyzed polyethylene.

4. The composition of claim 1 wherein said wax is selected from the group consisting of paraffin wax, microcrystalline wax, and synthetic wax.

## Patentansprüche

1. Heißschmelzklebezusammensetzung, aufweisend:
2% bis 30% eines Petrolatums;
1% bis 30% eines Styrol-Block-Copolymers;
1% bis 30% eines Polyolefin-Polymers;
20% bis 50% eines Klebrigmachers oder einer Mischung aus Klebrigmachern;
0% bis 25% eines Wachses;
0% bis 3% eines Antioxidans oder Stabilisators; und
0% bis 3% an Hilfsadditiven.

2. Zusammensetzung nach Anspruch 1, wobei der Styrol-Block-Copolymer aus der Gruppe ausgewählt ist, die aus Styrol-Isopren-Styrol (SIS), Styrol-Butadien-Styrol (SBS), Styrol-Isopren/Butadien-Styrol (SIBS) und Styrol-(Ethylen-Butylen)-Styrol (SEBS) besteht.

3. Zusammensetzung nach Anspruch 1, wobei das Polyolefin-Polymer aus der Gruppe ausgewählt ist, die aus Ethylen-Vinyl-Acetat (EVA), Propylen/EthylenCopolymeren, Ethylen/Alpha-Olefin-Copolymeren, Olefin-Block-Copolymeren, Ethylen-n-Butyl-Acrylat-Copolymeren, und Metallocen-katalysiertem Polyethylen besteht.

4. Zusammensetzung nach Anspruch 1, wobei das Wachs aus der Gruppe ausgewählt ist, die aus Paraffinwachs, mikrokristallinem Wachs und synthetischem Wachs besteht.

## Revendications

1. Une composition adhésive thermofusible comprenant :
2% à 30% de pétrolatum ;
1% à 30% d'un copolymère séquencé styrénique ;
1% à 30% de polymère de polyoléfine ;
20% à 50% d'un agent poisseux ou un mélange d'agents poisseux ;
0% à 25% d'une cire ;
0% à 3% d'un antioxydant ou d'un stabilisant ; et
0% à 3% d'additifs auxiliaires.

2. La composition selon la revendication 1, dans laquelle ledit copolymère séquencé styrénique est sélectionné parmi le groupe consistant en styrène-isoprène-styrène (SIS), styrène-butadiène-styrène (SBS), styrène-isoprène/butadiène-styrène (SEBS) et styrène-(éthylène-butylène)-styrène (SEBS).

3. La composition selon la revendication 1, dans laquelle ledit polymère de polyoléfine est sélectionné parmi le groupe consistant en l'éthylène acétate de vinyle (EVA), les copolymères propylène/éthylène, les copolymères éthylène/alpha-oléfine, les copolymères bloc d'oléfine, les copolymères d'éthylène acrylate de n-butyle, et le polyéthylène catalysé par un métallocène.

4. La composition selon la revendication 1 dans laquelle ladite cire est sélectionnée parmi le groupe consistant en la cire de paraffine, la cire microcristalline et la cire synthétique.
